Europäisches Patentamt

European Patent Office

Office européen des brevets

(19)

(11) Numéro de publication : **0 162 174**
**B1**

(12) **FASCICULE DE BREVET EUROPÉEN**

(45) Date de publication du fascicule du brevet :
09.11.88

(51) Int. Cl.⁴ : **H 04 L 11/20**

(21) Numéro de dépôt : 84430016.0

(22) Date de dépôt : 23.05.84

(54) **Dispositif tampon utilisé dans un réseau de transmission de la voix.**

(43) Date de publication de la demande :
27.11.85 Bulletin 85/48

(45) Mention de la délivrance du brevet :
09.11.88 Bulletin 88/45

(84) Etats contractants désignés :
DE FR GB

(56) Documents cités :
IEEE GLOBAL TELECOMMUNICATIONS CONFE-
RENCE, San Diego, 28 novembre - 1 décembre 1983,
vol. 1, pages 2.5.1 - 2.5.6, IEEE, US; T.E. STERN: "A
queueing analysis of packet voice"
IEEE TRANSACTIONS ON VEHICULAR TECHNO-
LOGY, vol. VT-32, no. 2, mai 1983, pages 158-168,
IEEE, New York; US; A.J. MACKIE et al.: "Design and
performance evaluation of a packet voice system".

(73) Titulaire : **International Business Machines Corporation**
**Old Orchard Road**
**Armonk, N.Y. 10504 (US)**
**DE GB**
**Compagnie IBM FRANCE**
**5 Place Vendôme**
**F-75000 Paris 1er (FR)**
**FR**

(72) Inventeur : **Platel, Guy**
**"Les Véroniques" No 15 Hameau du Soleil**
**F-06270 Villeneuve Loubet (FR)**
Inventeur : **Secondo, Pierre**
**Villa "La Ferrage" Rue de la Ferrage**
**F-06640 Saint Jeannet (FR)**
Inventeur : **Wiest, Sylvain**
**Villa Marina Chemin des Pierres Noires**
**F-06270 Villeneuve Loubet (FR)**

(74) Mandataire : **Tubiana, Max**
**Compagnie IBM France Département de Propriété**
**Industrielle**
**F-06610 La Gaude (FR)**

## 0 162 174

**Description**

### Domaine Technique de l'Invention

L'invention traite de la transmission numérique de données d'origine vocale et plus particulièrement d'une transmission de la voix par paquets de bits dans un système comportant un dispositif tampon.

### Etat de la Technique

Les techniques de multiplexage permettent de concentrer sur une même ligne les données provenant de plusieurs sources. Lorsque les sources travaillent de manière intermittente et aléatoire, le nombre de sources rattachées à la ligne de transmission à travers un réseau peut être supérieur à celui que la capacité instantanée de la ligne pourrait laisser prévoir. Pour des sources fournissant des signaux d'origine vocale, on utilise à cet effet des techniques dites TASI (Time Assignment Speech Interpolation) ou DSI (Digital Speech Interpolation).

Dans les systèmes de type DSI, des bits ou paquets de bits en provenance des sources actives à un moment donné, sont mis en série avant d'être transmis sur la ligne. La transmission sur la ligne se fait de manière synchrone (notamment à travers un modulateur/démodulateur (modem) numérique), alors que la fourniture des bits par les sources est par nature asynchrone. Un dispositif tampon est donc nécessaire entre les sources et la ligne de transmission. Mais le tampon introduit un retard supplémentaire entre une source et le destinataire des signaux vocaux émis par cette source. Dans une conversation en temps réel, on comprend qu'au delà d'une certaine valeur de retard entre émetteur et récepteur en convocation la communication devienne inintelligible ou pénible. On préfère alors carrément ne pas transmettre des portions de message ayant séjourné trop longtemps dans le dispositif tampon. Pour ce faire, on doit « purger » le dispositif tampon en supprimant des données qui y auraient séjourné trop longtemps.

Lorsque l'opération de purge est réalisée de manière systématique, on fixe une limite « L » à la capacité du tampon et on le purge d'une quantité prédéterminée et fixe « x » lorsque le seuil de capacité L est atteint dans le tampon. Cette méthode risque de perturber le trafic en rendant inintelligible le message fourni à certains destinataires qui auraient subi les purges de façon répétée sans précaution particulière.

Le document intitulé « A queuing analysis of packet voice », publié à l'IEEE Global Telecommunications Conference, San Diego, 28 Nov.-1er Dec. 1983, Vol. 1, Pages 2.5.1 à 2.5.6 par T. E. Stern, décrit un système d'analyse de l'optimisation de files d'attente d'un dispositif tampon dans un système de transmission de la voix par paquets. Cette étude théorique se préoccupe notamment de rechercher les variations de la file d'attente compte tenu du caractère aléatoire des arrivées de paquets et de la nécessité de rejeter au niveau du nœud des paquets dont le retard dépasserait une valeur limite prédéterminée.

### Objet de l'Invention

La présente invention a pour objet un dispositif tampon associé à un système de purge conçu de manière à minimiser les risques de perturbation du trafic.

En outre, il existe des méthodes permettant de compenser côté réception, les portions de messages vocaux non reçues donc ayant notamment subi l'opération de purge à l'émission, en tenant compte des propriétés spécifiques du signal vocal.

La présente invention concerne plus spécialement des moyens de purge du dispositif tampon permettant de minimiser les risques de détérioration des messages d'origine vocale transmis dans un système possédant des moyens de reconstitution de portions de message perdues ou reçues de manière erronée.

D'autres objets, caractéristiques et avantages de la présente invention ressortiront de la description suivante faite en se référant aux dessins annexés.

### Brève Description des Figures

Figure 1 : schéma de principe d'une partie d'un type de réseau de transmission auquel s'applique l'invention.

Figure 2 : schéma de principe d'un mode de réalisation de l'invention.

Figure 3 : un schéma de principe d'un autre mode de réalisation du dispositif de l'invention.

Figure 4 : un mode de réalisation de l'invention.

Figure 5 : précision d'un mode de fonctionnement du dispositif de l'invention.

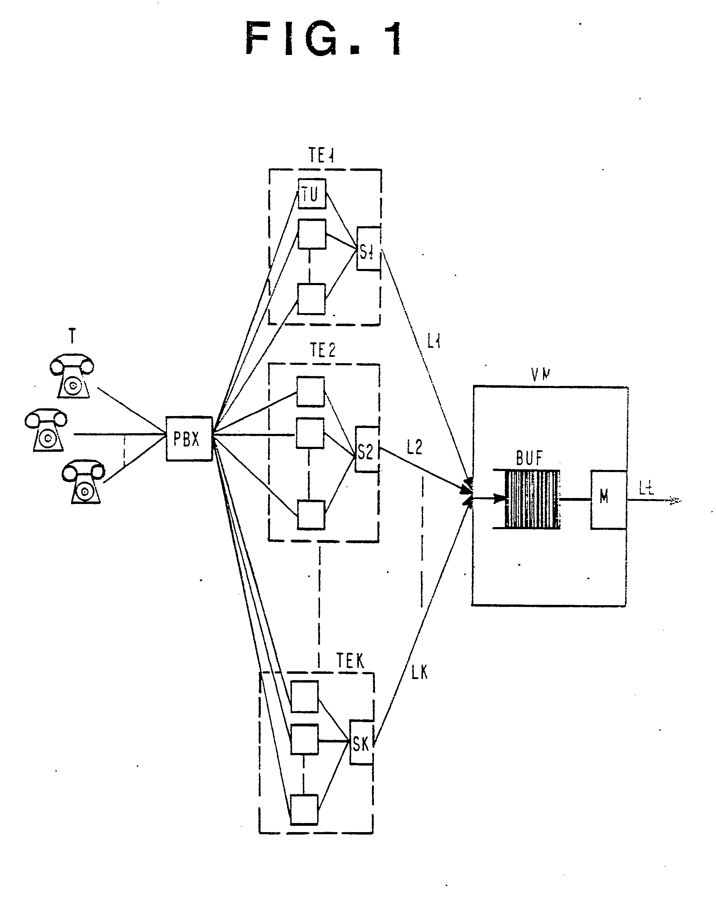

On a représenté sur la figure 1, le schéma de principe d'une extrémité émission d'un type de réseau de transmission de la voix auquel s'applique l'invention. Les combinés téléphoniques (T) d'un grand nombre de clients sont rattachés au réseau de transmission à travers une unité de commutation ou central téléphonique (PBX ou CX). En cours de fonctionnement, chaque client désirant téléphoner se voit affecter une ligne de sortie de l'unité de commutation aboutissant à une unité terminale de codage de la voix (TU). L'unité de type TU a pour but de coder numériquement le signal vocal. Ce codage est dans le

2

cas de l'exemple choisi, effectué en appliquant les techniques dites BCPCM (Block Companded PCM) telles que décrites dans le brevet européen No. 0 002 998 notamment. Autrement dit, le signal vocal d'un locuteur donné est traité par tronçons successifs de durée prédéterminée (20 ms par exemple). Chaque tronçon délivre un bloc de bits représentant donc 20 ms de signal.

Les terminaux de type TU sont regroupés (par huit, par exemple) au sein d'un même équipement terminal (TE). L'équipement terminal possède un moyen de balayage (S1, S2, ... SK) qui balaye séquentiellement les unités terminales qui lui sont rattachées pour en prélever les blocs de données à transmettre. Chaque moyen de balayage S1 à SK, commandé par une horloge locale (non représentée) prélève toutes les 5 ms deux blocs de bits représentant donc 40 ms de signal vocal. Ces deux blocs de bits constituent un paquet de bits qui est transmis vers un concentrateur ou multiplexeur de voix VM, via une ligne L1, L2 ou LK. Les paquets des unités terminales TU rattachées à un même équipement terminal TE sont transmis séquentiellement sur la ligne L1 à LK correspondante au rythme de l'horloge locale du moyen de balayage S1 à SK correspondant. Si l'on suppose que les horloges associées aux différents équipements terminaux TE1 à TEK sont indépendantes entre elles, les transmissions vers le concentrateur VM sont donc asynchrones.

De plus, les conversations de locuteurs rattachés à un combiné téléphonique T en fonction comportent des périodes de silence et des périodes d'activité effective. On entend par période d'activité effective, la période durant laquelle un « flot de voix » (talkspurt) est fourni par la source vocale rattachée à un élément TU. Ces périodes d'activité effective sont signalées par un détecteur d'activité (VAD) non représenté sur la figure. Un détecteur d'activité pouvant être utilisé ici a été décrit dans la demande de brevet déposée par la demanderesse le 7 juin 1983 sous le N° 83430018.8.

Le concentrateur VM utilise un processeur programmé auquel est soumise une demande d'interruption à chaque arrivée d'un paquet. Cette demande d'interruption sollicite du processeur, l'exécution d'une opération dite d'entrée/sortie. Les horloges des différents équipements terminaux TE1 et TEK étant indépendantes les unes des autres, lesdites opérations d'entrée/sortie sont sollicitées de manière asynchrone. Autrement dit les paquets de bits arrivent sur le concentrateur VM de manière asynchrone. Par contre, tous les bits collectés par le concentrateur sont sérialisés de manière synchrone sur la ligne LL (canal de transmission) éventuellement à travers un modulateur/démodulateur ou modem M. Le modem utilisera par exemple les techniques dites à double bandes latérales — porteuses en quadrature (DSB-QC) du genre de celles utilisées dans les modems IBM de type 3865. Il est donc nécessaire de réguler le flot de bits entre entrée et sortie du concentrateur, ou plus exactement entre l'entrée du concentrateur et celle du modem. Cette régulation est réalisée à l'aide d'une mémoire tampon (BUF) représentée de manière schématique sur la figure 1.

Des raisons d'ordres économique et technique évidentes conduisent à limiter la longueur L de la mémoire tampon (BUF). Cette longueur L est en général définie à partir de considérations statistiques.

On désignera par N le nombre de conversations téléphoniques établies à un moment donné, et par C la capacité de la ligne LL en canaux équivalents. On entend par là que pour un canal LL à 144 Kbps utilisé pour véhiculer des voix codées à 9 Kbps, le terme C = 144/9 = 16.

Les techniques d'interpolation de type DSI permettent un fonctionnement du réseau de transmission dans des conditions telles que N puisse être supérieur à C en tenant compte du fait que, comme on l'a signalé plus haut, au cours d'une conversation, le canal vocal rattaché à un locuteur n'est occupé que par intermittence.

On arrive à déterminer statistiquement les limites raisonnables à donner à la mémoire tampon BUF. Mais compte tenu du caractère aléatoire du rapport N/C, la mémoire tampon BUF, peut, à un instant donné, être saturée. D'où risque de perte d'informations représentant de la voix codée.

D'autre part, la mise des données en mémoire tampon crée un retard supplémentaire à la transmission de la voix. Malgré les moyens spéciaux offerts dans un système de type DSI conventionnel, un retard de transmission important risque de rendre la conversation inintelligible ou difficile tout au moins. On admet en pratique que pour une conversation en temps réel, le délai de transmission entre un interlocuteur rattaché à un combiné téléphonique et son correspondant ne doit pas dépasser 300 ms. Donc, plutôt que de perdre, du fait de la saturation de la mémoire tampon, les paquets de données les plus récents, il est préférable de « purger » la mémoire tampon en supprimant des paquets consécutifs pouvant être les plus anciens. On choisira de supprimer un nombre x de paquets parmi les plus anciens. Les paquets de données supprimés de la mémoire tampon BUF, donc non transmis au destinataire, sont naturellement perdus pour celui-ci. Il existe cependant des procédés permettant au récepteur du destinataire de compenser ces pertes de données d'origine vocale. L'un de ces procédés a été décrit par la demanderesse dans une demande de brevet européen déposée le 28 octobre 1983 sous le N° 83430035.2. Ces procédés ont eux-mêmes des limites. Notamment, la perte de paquets de bits affectant de manière répétée un même destinataire peut rendre la compensation inopérante. Ceci signifie qu'il faut notamment définir avec précaution les dimensions (x) de la purge par rapport à la longueur L de la mémoire tampon pour éviter ce genre de situation. On peut le faire en se basant encore sur des considérations statistiques résultant d'études faites sur les réseaux de transmission de la voix qui permettent de donner à priori à x et L des valeurs fixes prédéterminées. Mais si à un moment donné, en fonctionnement réel, x s'avère faible, la mémoire tampon sature et des paquets récents risquent d'être perdus ; par contre si x est trop important le système de transmission est pénalisé inutilement par pertes de paquets qui auraient pu être évitées.

On propose ici un système permettant d'éviter les inconvénients ci-dessus grâce à une détermination dynamique des caractéristiques de la mémoire tampon et du dispositif de purge qui lui est associé.

On notera tout d'abord que la file d'attente des paquets de voix (paquets de données relatives aux signaux vocaux à transmettre) contenus dans la mémoire tampon BUF varie à chaque arrivée ou départ d'un paquet. Pendant les périodes où le débit entrant instantané est inférieur au débit sortant (débit sur la ligne LL), la mémoire tampon se vide. Ces périodes seront dites de sous-charge.

Pendant les périodes où le débit entrant instantané est au contraire supérieur au débit de ligne, le tampon se remplit. La file d'attente croît. On parlera alors de périodes de surcharge.

En trafic normal, il y a alternance de périodes de sous-charge et de périodes de surcharge. Pour que la purge puisse être adaptative, le système doit déceler les périodes de surcharge.

Le procédé de l'invention permet de déterminer en temps réel (t) les valeurs optimales $x_{(t)}$ et $L_{(t)}$ à attribuer à x et L en fonction de la valeur instantanée de la surcharge pour écouler le plus de trafic possible en minimisant le délai de transmission de paquets.

Si l'on désigne, comme on l'a fait plus haut, par N le nombre de conversations établies et par C la capacité équivalente du canal de transmission, on sait que l'avantage du DSI est défini par le rapport N/C et que N/C > 1.

Parmi les N conversations dans un intervalle de temps correspondant à la période de balayage des entrées du concentrateur (ex. 40/ms), seules $n_{(t)}$ sources de paquets de voix sont réellement actives, c'est-à-dire, fournissent au codeur de l'unité terminale VT des paquets de bits correspondant à un flot ou segment de voix (talkspurt). Pour un système de transmission donné, si on mesure ce nombre $n_{(t)}$ toutes les T = 100 ms par exemple, on constate qu'il varie peu. On peut donc dire que pendant la période T, le débit entrant dans le multiplexeur VM varie peu.

Soit

$$\rho_{(t)} = n_{(t)}/C \tag{1}$$

Puisque $n_{(t)}$ varie entre zéro et N, $\rho_{(t)}$ varie donc entre zéro et N/C. Durant les périodes de surcharge, $\rho_{(t)} > 1$.

Selon le procédé de l'invention, dès que la file d'attente dans la mémoire tampon dépasse L paquets de bits, on purge la mémoire en supprimant x paquets les plus anciens (x ⩽ L). On rappellera cependant que l'on peut aussi supprimer x paquets de la file d'attente qui ne seraient pas les plus anciens. Plus précisément, on détruit x paquets, puis on laisse passer p paquets sur la ligne jusqu'au moment où la file d'attente est à nouveau pleine. A ce moment, on supprime à nouveau x paquets en attente, puis on en laisse passer p, et ainsi de suite. Naturellement, x et p varient en fonction du temps.

On peut donc dire que le cycle d'opération du système de purges sera de la forme suivante :.

— supprimer $x_{(t)}$ paquets,
— laisser passer $p_{(t-1)}$ paquets,
— supprimer $x_{(t+1)}$ paquets,
— laisser passer $p_{(t+2)}$ paquets,
— etc...

Pour que ce procédé de purge soit adaptatif, le système doit comporter des moyens permettant de déterminer les valeurs optimales des paramètres tels que notamment x, p et L, c'est-à-dire que ces moyens seront conçus pour éviter les purges inutiles ou excessives, compte tenu non seulement du trafic réel instantané du système de transmission auquel on applique l'invention, mais encore des caractéristiques dudit système.

On notera tout d'abord que $x_{(t)}$ et $p_{(t)}$ sont liés par les relations suivantes :

$$x_{(t)} = [\rho_{(t)} - 1] \cdot p_{(t)} \tag{2}$$

ou encore :

$$x_{(t)} = ((n_{(t)}/C) - 1) \cdot p_{(t)} \tag{3}$$

Il s'agit d'écouler le plus de trafic possible en minimisant le délai de transmission des paquets. Comme par ailleurs, on a l'intention d'utiliser l'invention dans un système qui, à la réception, reconstitue les paquets perdus, il faut tenir compte des caractéristiques du dispositif de reconstitution utilisé. Un dispositif de reconstitution de paquets perdus a été décrit dans la demande de brevet N° 83430035.2 déposée le 28 octobre 1983. Son fonctionnement est optimal lorsque sont évitées les situations dans lesquelles deux paquets consécutifs d'un même locuteur sont perdus. On va donc ici imposer une contrainte tendant à éviter la suppression par purge, de deux paquets consécutifs d'une même unité vocale TU.

D'où les contraintes :

$$x_{(t)} \geq 1 \tag{4}$$

$$x_{(t)} \leq n_{(t)} \tag{5}$$

donc :

$$x_{(t)} \leq \rho_{(t)} \cdot C \tag{6}$$

En outre, on laisse passer $p_{(t)}$ paquets, mais on voudrait que chaque locuteur en action, c'est-à-dire émettant un « segment de voix » (talkspurt), ait émis au moins un paquet avant de subir une purge, d'où la contrainte :

$$P_{(t)} \geq n_{(t)} \tag{7}$$

$$x_{(t)} \geq \rho_{(t)} \cdot C[\rho_{(t)} - 1] \tag{8}$$

Les contraintes ci-dessus minimisent l'impact de la suppression de paquet sur la qualité de la voix dans le contexte considéré. Elles ne peuvent être simultanément respectées que pour $\rho_{(t)} \leq 2$, ce qui est réaliste (l'avantage TASI ou D.S.I. étant approximativement de 1.5 en général).

On prendra donc pour $x_{(t)}$ la valeur entière la plus proche supérieurement de $\rho_{(t)} \cdot C(\rho_{(t)} - 1)$.

On ne peut évidemment supprimer plus de paquets qu'il n'y en a dans la file d'attente. D'où :

$$L_{(t)} \geq x_{(t)} \tag{9}$$

Comme on veut que $L_{(t)}$ soit minimum, on aura intérêt à choisir :

$$L_{(t)} = x_{(t)} \tag{10}$$

Cette condition n'étant cependant pas nécessaire au fonctionnement du système. Par conséquent, en mesurant $n_{(t)}$ à intervalles suffisamment courts, on peut ajuster la purge du dispositif tampon de façon optimale pour atteindre les objectifs que l'on s'est fixés.

Quelques précautions supplémentaires peuvent encore être prises pour éviter toute perte d'information. La première découle du fait que bien que dans le cas où l'opération de purge est réalisée à intervalles fréquents (par exemple inférieurs à 100 ms) $n_{(t)}$ varie peu, il peut être prudent, pour certaines valeurs de $n_{(t)}$ de faire en sorte que $p_{(t)} = n_{(t)} + \Delta n$ avec $\Delta n = 2$ par exemple. Dans ce cas, on choisira pour $x_{(t)}$ la valeur entière la plus proche supérieurement de :

$$(n_{(t)} + 2)\left( \frac{n_{(t)}}{C} - 1 \right) \tag{11}$$

Une seconde précaution consiste à noter qu'en raison du caractère asynchrone des transmissions sur les lignes L1 à LK, il peut arriver que K paquets arrivent simultanément à l'entrée de la mémoire tampon. Il est donc prudent de ne pas permettre à $L_{(t)}$ d'être inférieur à K (soit 10 par exemple).

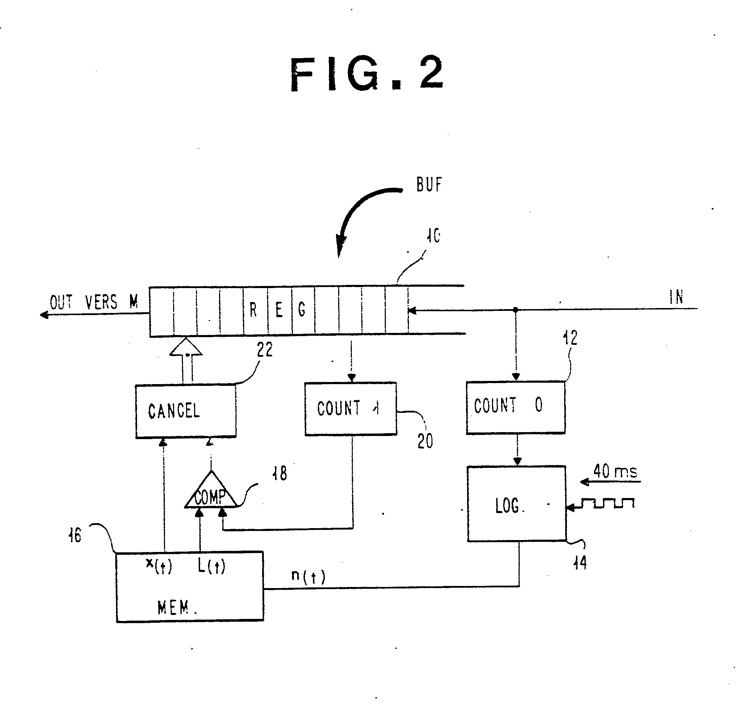

Partant des principes énoncés ci-dessus, le dispositif tampon peut être réalisé selon le schéma de la figure 2. L'entrée IN d'un registre tampon (REG), 10 est reliée aux lignes L1 à LK.

Cette même entrée IN est aussi reliée à un compteur de paquets (COUNT0) 12 dont la sortie est reliée à un circuit logique (LOG) 14. Ce circuit logique est aussi commandé par une horloge (non représentée) lui fournissant un signal de référence de temps réel dont la période est dans l'exemple considéré, fixée à 40 ms. La sortie du circuit logique 14 est utilisée pour adresser une mémoire (MEM) 16 dont la sortie fournit deux informations à savoir $x_{(t)}$ et $L_{(t)}$. La sortie $L_{(t)}$ est envoyée vers un comparateur (COMP) 18 dont la seconde entrée est reliée à un compteur (COUNT1) 20. Ce dernier compteur compte les paquets contenus dans le registre tampon 10. La seconde sortie de la mémoire 16, à savoir $x_{(t)}$ est orientée vers un dispositif de purge (CANCEL) 22 qui est par ailleurs commandé par la sortie du comparateur 18. L'ensemble 16, 18 et 22 constitue plus exactement l'ensemble des moyens dits de purge.

En fonctionnement, à chaque entrée d'un paquet de bits dans le registre tampon 10, les contenus des compteurs 12 et 20 sont augmentés d'une unité. Toutes les 40 ms, l'horloge (non représentée), provoque le transfert dans le circuit logique 14, de la valeur contenue dans le compteur 12, tandis que ce même compteur 12 est remis à zéro. La valeur numérique chargée dans le circuit logique 14 représente $n_{(t)}$. Cette valeur sert à adresser la mémoire 16 qui fournit $x_{(t)}$ et $L_{(t)}$. Lorsque le contenu du registre tampon 10 déterminé par le compteur 20 est égal à $L_{(t)}$, le comparateur 18 active le dispositif de purge 22. Ce dispositif supprime les $x_{(t)}$ paquets les plus anciens contenus dans le registre tampon 10, en décalant de $x_{(t)}$ paquets, le contenu dudit registre 10, sans permettre à ces paquets d'atteindre l'entrée du modem M.

Les relations (1) à (11) établies plus haut permettent de concevoir le tableau I ci-dessous. On a supposé ici que N = 28, que C = 16 et que $\rho_{(t)}$ varie de 0 à 1.75.

Tableau I

| $n_{(t)}$ | $\rho_{(t)}$ | $x_{(t)}$ | $L_{(t)}$ | $P_{(t)} = x_{(t)}/\rho_{(t)} - 1$ |
|---|---|---|---|---|
| 28 | 1,75 | 21 | 21 | 28 |
| 27 | 1,688 | 19 | 19 | 27,6 |
| 26 | 1,625 | 17 | 17 | 27,2 |
| 25 | 1,563 | 15 | 15 | 26,6 |
| 24 | 1,5 | 12 | 15 | 24 |
| 23 | 1,438 | 11 | 12 | 25,1 |
| 22 | 1,375 | 9 | 10 | 24 |
| 21 | 1,313 | 7 | 10 | 22,4 |
| 20 | 1,25 | 5 | 10 | 20 |
| 19 | 1,188 | 4 | 10 | 21,3 |
| 18 | 1,125 | 3 | 10 | 24 |
| 17 | 1,063 | 2 | 10 | 31,7 |
| 16 | 1 | 1 | 10 | − |
| 15 | 0,938 | 1 | 10 | − |
| 14 | 0,875 | 1 | 10 | − |
| 13 | 0,813 | 1 | 10 | − |
| 12 | 0,75 | 1 | 10 | − |
| 11 | 0,688 | 1 | 10 | − |
| 10 | 0,625 | 1 | 10 | − |
| 9 | 0,563 | 1 | 10 | − |
| 8 | 0,5 | 1 | 10 | − |
| 7 | 0,438 | 1 | 10 | − |
| 6 | 0,375 | 1 | 10 | − |
| 5 | 0,313 | 1 | 10 | − |
| 4 | 0,25 | 1 | 10 | − |
| 3 | 0,188 | 1 | 10 | − |
| 2 | 0,125 | 1 | 10 | − |
| 1 | 0,063 | 1 | 10. | − |
| 0 | 0 | 1 | 10 | − |

On notera que, pour les raisons évoquées plus haut, on a imposé à $L_{(t)}$ un seuil inférieur égal à K = 10.

En outre, pour des raisons évidentes, $x_{(t)}$ ne peut être inférieur à 1.

Dans le cas où l'on impose la contrainte $p_{(t)} = n_{(t)} + 2$, et donc $x_{(t)}$ valeur entière la plus proche supérieurement de

$$(n_{(t)} + 2)\left(\frac{n_{(t)} + 2}{C} - 1\right)$$

Le tableau I doit être modifié pour que $p_{(t)} = n_{(t)} + 2$ et dans les cas où cette dernière relation n'est pas vérifiée, imposer $x_{(t)} = n_{(t)} \cdot (\rho_{(t)} - 1)$. On obtient alors un tableau non représenté ici, mais légèrement différent de celui que l'on a représenté plus haut.

Les première, troisième et quatrième colonnes du tableau I, éventuellement modifiées, sont chargées dans la mémoire 16 du dispositif représenté sur la figure 2. Toutes les 40 ms, la valeur $n_{(t)}$ fournie par le circuit logique 14 adresse une ligne de la mémoire 16. La mémoire 16 délivre alors une valeur de $x_{(t)}$ et une valeur de $L_{(t)}$.

Le dispositif de la figure 2 peut naturellement comporter, en outre des moyens d'initialisation (non représentés). Pour une installation non personnalisée au départ, on prévoirait des moyens de calcul susceptibles de réaliser les opérations des expressions mathématiques représentées plus haut. Dans ce cas, après installation du réseau de communication, un opérateur entrerait dans le système les valeurs des paramètres notamment celles de N, C et éventuellement les seuils et facteurs de correction imposés. Les moyens de calculs se chargeraient alors de charger la mémoire 16 avant de démarrer le trafic des communications.

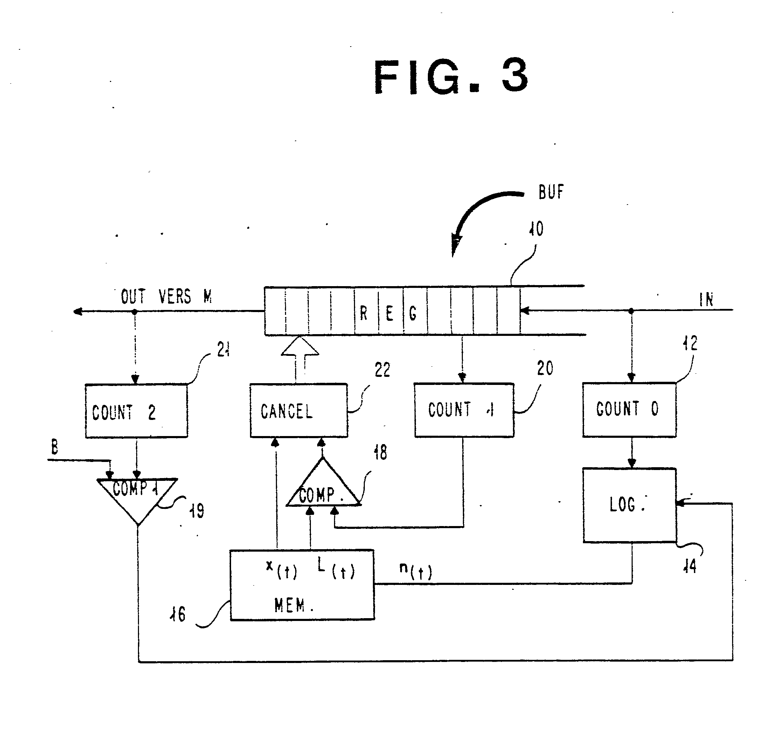

On a représenté sur la figure 3, une variante du mode de réalisation du dispositif de la figure 2. En effet, on peut supprimer l'horloge en temps réel (non représentée) fournissant la référence de temps de 40 ms. Pour cela, on a placé à la sortie du registre à décalage (REG) 10, un compteur (COUNT2) 21 dont la sortie est reliée à un comparateur (COMP1) 19. La seconde entrée du comparateur 19 reçoit une valeur fixe B. Le contenu du compteur 21 est augmenté d'une unité chaque fois qu'un paquet est extrait du registre tampon 10 pour être envoyé vers le modem M (non représenté). Lorsque le contenu du compteur 21 atteint la valeur B, le comparateur 19 délivre un signal logique remettant le contenu du compteur 21 à zéro et déclenchant le fonctionnement du circuit logique 14 tout comme le faisait le signal de l'horloge externe. Le signal logique fourni par le comparateur 19 se produit donc à des intervalles de temps donnés qui peuvent être variables en fonction de la valeur de B.

En principe, le registre tampon 10 fournit au modem M un paquet de bits toutes les Ts secondes (Ts = 2,5 ms par exemple). Donc seize paquets doivent sortir du registre tampon 10 toutes les 40 ms. En donnant à B la valeur seize, l'intervalle de temps séparant deux impulsions consécutives sortant du comparateur 19 est donc de 40 ms. On retrouve ainsi l'information d'horloge citée à propos de la figure 2.

On notera cependant qu'en période de sous charge, le registre tampon peut être vide. Dans ce cas, le fonctionnement du dispositif jouant le rôle d'horloge semble faussé car l'intervalle de temps donné entre deux impulsions consécutives sortant du comparateur 19 n'est pas constant. Mais cela ne perturbe nullement le fonctionnement du dispositif de purge, car il n'y a pas lieu de pratiquer une purge en période de sous-charge, le registre tampon ayant tendance à se vider de lui-même. En effet, comme on l'a vu plus haut, la valeur de $L_{(t)}$ a été limitée à une valeur minimum (10 par exemple comme le montre le tableau 1). Or en période de sous-charge, le contenu du registre tampon 10 ne pourra atteindre ce minimum de paquets, donc le comparateur 18 ne déclenchera pas le mécanisme de purge à travers le dispositif 22.

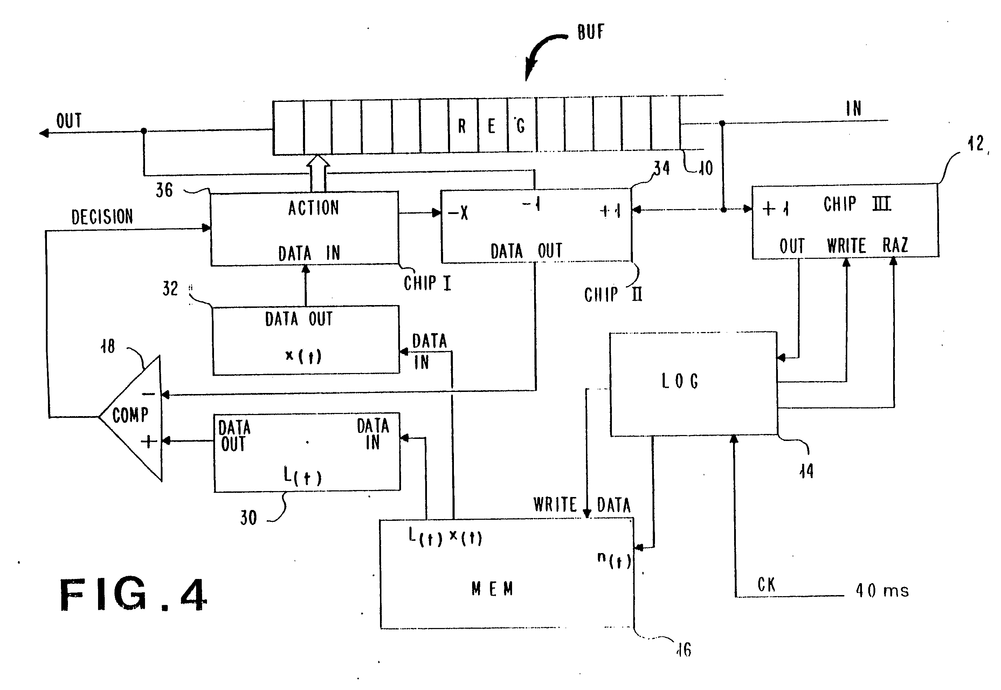

On a représenté sur la figure 4, un mode de réalisation plus détaillé du dispositif de la figure 2. On a désigné par chip III, le compteur 12. Ce compteur possède une entrée + 1 qui est reliée à l'entrée des paquets de bits dans le registre 10. A chaque arrivée d'un paquet, le contenu du compteur 12 est donc augmenté d'une unité. Le compteur 12 possède en outre une sortie « data out » et deux entrées « write data » et « RAZ » reliées au circuit 14. Toutes les 40 ms, une entrée horloge « CK » du dispositif 14 est excitée. Ceci provoque l'envoi d'un niveau logique 1 sur les lignes aboutissant aux entrées « write data » et « RAZ » du compteur 12. Il en résulte, d'une part le transfert du contenu du compteur 12 vers le circuit 14 par la ligne « data out » et d'autre part la remise à zéro du compteur 12 qui est alors près à entamer les opérations du cycle de 40 ms suivant. Une fois ces opérations réalisées, le niveau logique d'une sortie dite « write data » du circuit 14 est porté à 1, ce qui provoque la lecture par la mémoire 16 de l'information d'adresse $n_{(t)}$ fournie par le circuit 14 sur une de ses sorties dite « address ». La mémoire 16 fournit alors sur ses sorties « data out », les valeurs de $L_{(t)}$ et $x_{(t)}$ correspondant à $n_{(t)}$ c'est-à-dire stockées à l'adresse $n_{(t)}$ de la mémoire 16. Les valeurs de $L_{(t)}$ et $x_{(t)}$ sont respectivement chargées dans des registres 30 et 32.

Un autre compteur, désigné par (chip II) 34 est relié aux entrée et sortie du registre tampon 10. Chaque entrée d'un paquet dans le registre 10 provoque l'accroissement du contenu du compteur 34 d'une unité. Chaque sortie d'un paquet du registre 10 diminue le contenu du compteur 34 d'une unité. Le contenu d'un compteur 34 apparaissant sur une de ses sorties dite « data out » est appliqué au comparateur 18. Dès que la sortie du compteur 34 est égale à $L_{(t)}$, la sortie du comparateur 18 passe au niveau logique 1. Ceci provoque le transfert du contenu du registre 32 dans un dispositif logique 36 (chip I). Le dispositif 36 provoque alors le décalage du contenu du registre 10 de $x_{(t)}$ paquets, sans qu'un paquet ne soit réellement transféré vers la sortie OUT du registre (REG) 10. La valeur de $x_{(t)}$ est aussi envoyée du dispositif 36 vers l'entrée —x du compteur 34 dont le contenu est donc diminué de $x_{(t)}$ unités.

Il est évident que le circuit de la figure 4 peut aussi être utilisé pour réaliser le dispositif de la figure 3 à condition de rajouter le compteur 21 et le comparateur 19.

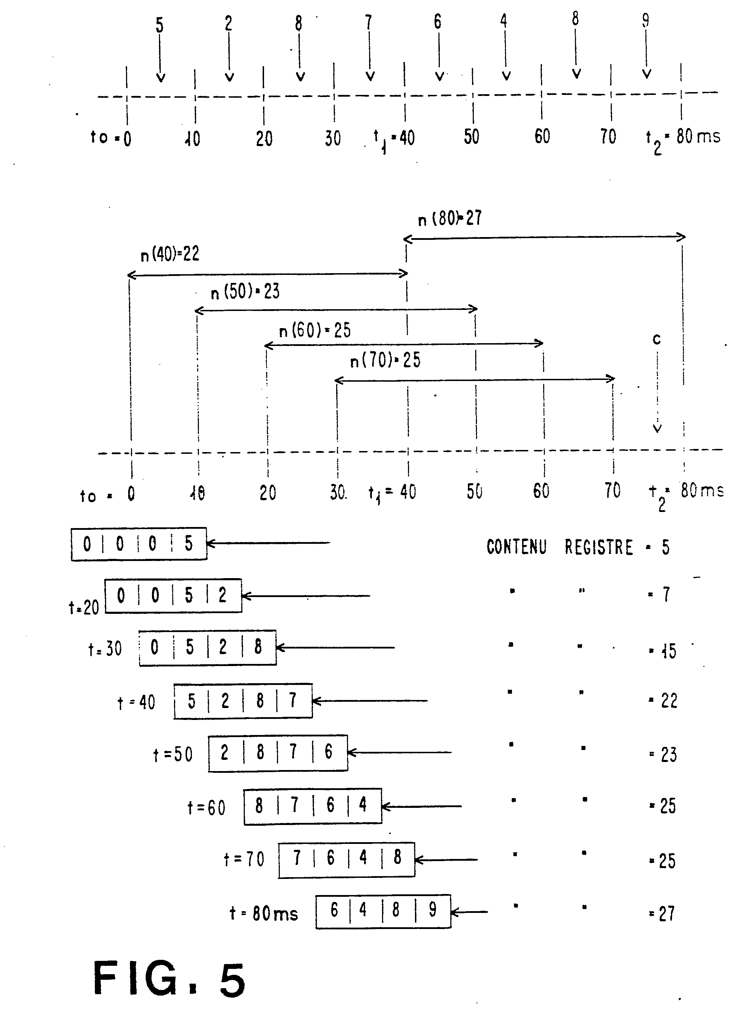

Quel que soit le mode de réalisation de l'invention, que ce soit celui de la figure 2 ou celui de la figure 3, tout se passe comme si $L_{(t)}$ était mesuré et comparé au contenu du compteur 20. La condition « longueur de la file d'attente dans le registre tampon est égale à $L_{(t)}$ » déclenche le mécanisme de purge. Supposons que l'on mesure $n_{(t)}$ entre les instants $t_0 = (k-1)$. 40 ms et $t_1 = k$. 40 ms ; puis $n'_{(t)}$ entre $t_1$ et l'instant $t_2 = (k + 1)$. 40 ms. Supposons aussi que la condition de déclenchement de la purge se produise entre $t_1$ et $t_2$. Les valeurs $x_{(t)}$ et $L_{(t)}$ sont alors définies par $n_{(t)}$ et non par $n'_{(t)}$. C'est pour cela que l'on a prévu des marges de sécurité pour compenser des variations trop rapides de $n_{(t)}$. En fait, on peut aussi mesurer $n_{(t)}$ à intervalles plus fréquents, comme par exemple toutes les 10 ms ou toutes les 2,5 ms. Dans ce cas, le circuit logique 14 comportera un registre à décalage dans lequel on entrera le contenu du compteur 12 (voir figures 2 et 3) toutes les 10 ms ou toutes les 2,5 ms. A l'instant $t_2$, on fera la somme des contenus des positions du registre à décalage (non représenté). On a schématisé sur la figure 5, un exemple de fonctionnement du système décrit ci-dessus, dans lequel on a choisi $t_0 = 0$, $t_1 = 40$ et $t_2 = 80$ ms. Supposons que dans les intervalles de 10 ms pris entre $t_0$ et $t_2$ les nombres de paquets se présentant à l'entrée du registre tampon (REG) 10 soient successivement 5, 2, 8, 7, 6, 4, 9 et 8. Dans l'exemple considéré, le registre à décalage (non représenté) contenu dans le circuit logique 14 comporte quatre positions. A l'instant $t_0 = 0$, ce registre à décalage initialement vide, reçoit la valeur 5. Son contenu est 0005. Dix millisecondes plus tard, la valeur 2 arrive à l'entrée du registre à décalage dont le contenu est décalé pour devenir 0052 ; et ainsi de suite. Ceci étant, la valeur $n_{(t)}$ qui servira à adresser la mémoire 16 à l'instant $t_2$ est $n_{(t)} = 27$.

## Revendications

1. Dispositif tampon utilisé dans un réseau de transmission numérique dans lequel des paquets de bits en provenance d'équipements terminaux asynchrones sont multiplexés par un concentrateur en vue d'une transmission sur un canal de transmission, ledit dispositif tampon étant caractérisé en ce qu'il comporte :

— une mémoire tampon (10) destinée à stocker séquentiellement les paquets de bits provenant des équipements terminaux ;

— des moyens d'entrée (IN) reliant l'entrée de la mémoire tampon auxdits équipements terminaux asynchrones ;

— des moyens de comptages (12) reliés auxdits moyens d'entrée et comptant le nombre $n_{(t)}$ de paquets de bits fournis par lesdits équipements terminaux durant un intervalle de temps donné ;

— des moyens de mesure (20) reliés à la mémoire tampon et mesurant le nombre de paquets contenus dans ladite mémoire tampon ; et,

— des moyens de purge comprenant :

un dispositif logique (16) relié auxdits moyens de comptage et délivrant pour chaque valeur dudit nombre $n_{(t)}$ des valeurs numériques $L_{(t)}$ et $x_{(t)}$ définissant respectivement la longueur optimale de la mémoire tampon et le nombre de paquets à supprimer de ladite mémoire tampon pour réaliser l'opération dite de purge ;

des moyens de comparaison (18) reliés auxdits moyens de mesure du nombre de paquets contenus dans la mémoire tampon, et destinés à fournir une indication logique traduisant l'égalité de $L_{(t)}$ avec le contenu de la mémoire tampon ; et

un dispositif de purge (22) répondant à ladite indication logique pour supprimer de la mémoire tampon les $x_{(t)}$ paquets de bits consécutifs contenus dans la mémoire tampon.

2. Dispositif tampon selon la revendication 1 caractérisé en ce que ledit intervalle de temps donné est fixé par une horloge en temps réel.

3. Dispositif tampon selon la revendication 1 caractérisé en ce que ledit intervalle de temps donné est fixé par un dispositif comptant, à la sortie de ladite mémoire tampon, un nombre prédéterminé de paquets.

4. Dispositif tampon selon l'une des revendications 1 à 3 caractérisé en outre en ce que lesdits équipements terminaux asynchrones reçoivent des signaux d'origine vocale.

5. Dispositif tampon selon l'une des revendications 1 à 4 caractérisé en outre en ce que ledit dispositif logique (16) délivrant pour chaque valeur $n_{(t)}$ des valeurs de $L_{(t)}$ et $x_{(t)}$ correspondantes est constitué par une mémoire préalablement chargée de manière à contenir à chaque adresse correspondant à une valeur de $n_{(t)}$ possible, une valeur de $x_{(t)}$ et une valeur de $L_{(t)}$.

6. Dispositif tampon selon la revendication 5 caractérisé en ce que chacun desdits équipements terminaux (TE) comprend :

— un nombre donné d'unités terminales (TU) de codage numérique de la voix, chacune desdites unités terminales étant affectée à un locuteur rattaché à un combiné téléphonique en fonction ; et,

— un dispositif de balayage (S) balayant de manière synchrone lesdites unités terminales dont les données sont transmises vers le concentrateur.

7. Dispositif tampon selon la revendication 6 caractérisé en ce que les valeurs de $L_{(t)}$ et $x_{(t)}$ mises en mémoire aux adresses $n_{(t)}$ obéissent aux relations :

$$x_{(t)} \geqslant (\rho_{(t)} - 1) \cdot n_{(t)} \text{ et } x_{(t)} \leqslant n_{(t)}$$

où

$$\rho_{(t)} = n_{(t)}/C$$

C étant la capacité équivalente du canal de transmission.

$$L_{(t)} \geqslant x_{(t)}$$

8. Dispositif tampon selon la revendication 7 caractérisé en outre en ce que $x_{(t)}$ est limité à une valeur inférieure telle que :

$$x_{(t)} = (n_{(t)} + \Delta n)\left(\frac{n_{(t)}}{C} - 1\right)$$

dans lequel n est une valeur numérique prédéterminée.

9. Dispositif tampon selon la revendication 8 caractérisé en outre en ce que $L_{(t)}$ est limité à une valeur inférieure égale au nombre d'équipements terminaux rattachés à l'extrémité émission du réseau de transmission.

10. Dispositif tampon selon la revendication 9 caractérisé en outre en ce que lesdites unités terminales codent numériquement la voix en appliquant les techniques dites BCPCM.

11. Dispositif tampon selon la revendication 10 caractérisé en outre en ce que la transmission sur le canal de transmission se fait à travers un modem utilisant les techniques dites DSB-QC.

**0 162 174**

**Claims**

1. A buffer device for a digital transmission network wherein packets of bits from asynchronous terminal equipments are multiplexed by a concentrator to be sent over a transmission channel, said buffer device being characterized in that it includes :
— a buffer (10) for sequentially storing packets of bits from the terminal equipments,
— input means (IN) connecting the input of the buffer to said asynchronous terminal equipments.
— counting means (12) connected to said input means and counting the number $n_{(t)}$ of packets of bits supplied by said terminal equipments during a given time interval,
— measuring means (20) connected to said buffer and measuring the number of packets contained in said buffer, and
— clearing means including :
a logic device (16) connected to said counting means and supplying for each value of said number $n_{(t)}$ digital values $L_{(t)}$ and $x_{(t)}$ respectively defining the optimal length of the buffer and the number of packets to be eliminated therefrom to perform a clearing operation,
comparing means (18) connected to said measuring means and supplying a logic indication denoting the equality of $L_{(t)}$ and the content of said buffer, and
a clearing device (22) responsive to said logic indication to eliminate from the buffer the $x_{t}$ consecutive packets of bits contained therein.

2. A buffer device according to claim 1, characterized in that said given time interval is set by a realtime clock.

3. A buffer device according to claim 1, characterized in that said given time interval is set by a device that counts a predetermined number of packets at the output of said buffer.

4. A Buffer device according to any one of claims 1 to 3, further characterized in that said asynchronous terminal equipments receive voice signals.

5. A buffer device according to any one of claims 1 to 4, further characterized in that said logic device (16) that supplies for each value of $n_{(t)}$ corresponding values of $L_{(t)}$ and $x_{(t)}$ is comprised of a storage previously loaded to store, at every address corresponding to a possible value of $n_{(t)}$, a value of $x_{(t)}$ and a value of $L_{(t)}$.

6. A buffer device according to claim 5, characterized in that each of said terminal equipments (TE) includes :
— a given number of terminal units (TU) for digitally encoding voice signals, each of said terminal units being associated with a speaker provided with an active telephone set, and
— a scanning device (S) for synchronously scanning said terminal units whose data are transmitted to the concentrator.

7. A buffer device according to claim 6, characterized in that the values of $L_{(t)}$ and $x_{(t)}$ stored at addresses $n_{(t)}$ are defined by the following relations :

$$x_{(t)} \geqslant (\rho_{(t)} - 1) \cdot n_{(t)} \text{ and } x_{(t)} \leqslant n_{(t)}$$

where

$$\rho_{(t)} = n_{(t)}/C$$

C being the equivalent capacity of the transmission channel, and

$$L_{(t)} \geqslant x_{(t)}.$$

8. A buffer device according to claim 7, further characterized in that $x_{(t)}$ is limited to a lower value such that

$$x_{(t)} = (n_{(t)} + \Delta n)\left(\frac{n_{(t)}}{C} - 1\right)$$

where $\Delta n$ is a predetermined digital value.

9. A buffer device according to claim 8, further characterized in that $L_{(t)}$ is limited to a lower value equal to the number of terminal equipments attached to the transmitting end of the transmission network.

10. A buffer device according to claim 9, further characterized in that voice signals are digitally encoded by said terminal units using BCPCM techniques.

11. A buffer device according to claim 10, further characterized in that transmissions over the transmission channel are carried out through a modem by means of DSB-QC techniques.

**Patentansprüche**

1. Puffervorrichtung, in einem Netz für die Übertragung digitaler Daten verwendet, in dem Bit-Pakete von asynchronen Terminalausrüstungen durch einen Konzentrator für die Übertragung auf einem

9

Übertragungskanal multiplexiert werden, wobei besagte Puffervorrichtung dadurch gekennzeichnet ist, dass sie enthält :

— einen Pufferspeicher (10), dafür bestimmt, sequentiell von den Terminalausrüstungen kommende Bit-Pakete zu speichern ;

— Eingangsmittel (IN), welche den Eingang des Pufferspeichers mit den besagten asynchronen Terminalausrüstungen verbinden ;

— Zählmittel (12), die mit den besagten Eingangsmitteln verbunden sind und die Anzahl $n_{(t)}$ der von den besagten Terminalausrüstungen in einem gegebenen Zeitintervall gelieferten Bit-Pakete zählen ;

— Messmittel (20), welche mit dem Pufferspeicher verbunden sind und die Zahl der im besagten Pufferspeicher enthaltenen Pakete messen ; und

— Entleerungsmittel, enthaltend :

eine logische Schaltung (16), die mit den besagten Zählmitteln verbunden ist und für jeden Wert der besagten Zahl $n_{(t)}$ Zahlenwerte $L_{(t)}$ und $x_{(t)}$ abgibt, welche jeweils die optimale Länge des Pufferspeichers bzw. die Anzahl Pakete, die aus dem besagten Pufferspeicher zu löschen ist, festlegen, um den sogenannten Entleerungsvorgang auszuführen ;

Vergleichsmittel (18), die mit den besagten Mitteln für die Messung der Anzahl der im Pufferspeicher enthaltenen Pakete verbunden und dafür bestimmt sind, eine logische Anzeige abzugeben, welche die Gleichheit von $L_{(t)}$ mit dem Inhalt des Pufferspeichers wiedergibt ; und

eine Entleerungsvorrichtung (22), welche auf die besagte logische Anzeige anspricht, um aus dem Pufferspeicher die $x_{(t)}$ aufeinanderfolgenden im Pufferspeicher enthaltenen Bit-Pakete zu löschen.

2. Puffervorrichtung gemäss Anspruch 1, dadurch gekennzeichnet, dass besagtes gegebenes Zeitintervall durch eine Realzeituhr festgelegt wird.

3. Puffervorrichtung gemäss Anspruch 1, dadurch gekennzeichnet, dass besagtes gegebenes Zeitintervall durch eine Vorrichtung festgelegt wird, welche am Ausgang des besagten Pufferspeichers eine vorgegebene Paketzahl zählt.

4. Puffervorrichtung gemäss einem der Ansprüche 1 bis 3, ausserdem dadurch gekennzeichnet, dass die besagten asynchronen Terminalausrüstungen Signale stimmlicher Herkunft empfangen.

5. Puffervorrichtung gemäss einem der Ansprüche 1 bis 4, ausserdem dadurch gekennzeichnet, dass besagte logische Vorrichtung (16), die für jeden Wert $n_{(t)}$ entsprechende Werte von $L_{(t)}$ und $x_{(t)}$ abgibt, aus einem vorher so geladenen Speicher besteht, dass er in jeder Adresse, die einem möglichen Wert von $n_{(t)}$ entspricht, einen Wert von $x_{(t)}$ und einen Wert von $L_{(t)}$ enthält.

6. Puffervorrichtung gemäss Anspruch 5, dadurch gekennzeichnet, dass jede der besagten Terminalausrüstungen (TE) umfasst :

— eine gegebene Anzahl Terminaleinheiten für die digitale Codierung der Stimme, wobei jede der besagten Terminaleinheiten einem Sprecher zugeordnet ist, der mit einem Telefonhörer in Betrieb in Verbindung steht ; und

— eine Abtastvorrichtung (S), welche die besagten Terminaleinheiten synchron abtastet, deren Daten an den Konzentrator geleitet werden.

7. Puffervorrichtung gemäss Anspruch 6, dadurch gekennzeichnet, dass die Werte für $L_{(t)}$ und $x_{(t)}$, die in den Adressen $n_{(t)}$ gespeichert werden, den Beziehungen entsprechen :

$$x_{(t)} \geqslant (\rho_{(t)} - 1) \cdot n_{(t)} \text{ und } x_{(t)} \leqslant n_{(t)}$$

oder

$$\rho_{(t)} = n_{(t)}/C$$

und C die äquivalente Kapazität des Übertragungskanals ist,

$$L_{(t)} \geqslant x_{(t)}$$

8. Puffervorrichtung gemäss Anspruch 7, ferner dadurch gekennzeichnet, dass $x_{(t)}$ auf einen niedrigeren Wert beschränkt ist als :

$$x_{(t)} = (n_{(t)} + \Delta n)\left(\frac{n_{(t)}}{C} - 1\right)$$

wobei n ein vorgegebener Zahlenwert ist.

9. Puffervorrichtung gemäss Anspruch 8, ferner dardurch gekennzeichnet, dass $L_{(t)}$ auf einen Wert kleiner als oder gleich der Anzahl der Terminalausrüstungen bechränkt ist, die am Sendeende des Übertragungsnetzes angeschlossen sind.

10. Puffervorrichtung gemäss Anspruch 9, ferner dadurch gekennzeichnet, dass die besagten Terminaleinheiten digital die Stimme codieren, indem sie die sogenannten BCPCM-Techniken anwenden.

11. Puffervorrichtung gemäss Anspruch 10, ferner dadurch gekennzeichnet, dass die Übertragung auf den Übertragungskanal durch ein Modem erfolgt, welches die sogenannten DSB-QC-Techniken verwendet.

# FIG. 1

# FIG. 2

BUF

10

OUT VERS M

| | | | | R | E | G | | | | | ← IN

CANCEL

22

COUNT 1

20

COUNT 0

12

COMP

18

LOG.

40 ms

14

16

x(t)    L(t)

n(t)

MEM.

# FIG. 3

FIG.4

FIG. 5